(19) Europäisches Patentamt / European Patent Office / Office européen des brevets

(11) **EP 4 654 287 A1**

(12) **EUROPEAN PATENT APPLICATION**
published in accordance with Art. 153(4) EPC

(43) Date of publication:
**26.11.2025 Bulletin 2025/48**

(21) Application number: **23917865.0**

(22) Date of filing: **08.11.2023**

(51) International Patent Classification (IPC):
$H01M\ 4/36^{(2006.01)}$    $H01M\ 4/38^{(2006.01)}$
$H01M\ 4/48^{(2010.01)}$    $H01M\ 4/587^{(2010.01)}$
$H01M\ 10/052^{(2010.01)}$    $H01M\ 4/02^{(2006.01)}$

(52) Cooperative Patent Classification (CPC):
**H01M 4/02; H01M 4/36; H01M 4/38; H01M 4/48;**
**H01M 4/587; H01M 10/052;** Y02E 60/10

(86) International application number:
**PCT/KR2023/017885**

(87) International publication number:
**WO 2024/154911 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2023 KR 20230008836**

(71) Applicant: **SK On Co., Ltd.**
**Seoul 03161 (KR)**

(72) Inventors:
• **KIM, Jae Ram**
  **Daejeon 34124 (KR)**
• **LEE, Yong Seok**
  **Daejeon 34124 (KR)**
• **KIM, Jung Hwan**
  **Daejeon 34124 (KR)**
• **MIN, Jae Yun**
  **Daejeon 34124 (KR)**
• **BAE, Sang Won**
  **Daejeon 34124 (KR)**
• **LEE, Myung Ro**
  **Daejeon 34124 (KR)**
• **LEE, Jae Yeong**
  **Daejeon 34124 (KR)**
• **JANG, Hyun Joong**
  **Daejeon 34124 (KR)**

(74) Representative: **Stolmár & Partner**
**Patentanwälte PartG mbB**
**Blumenstraße 17**
**80331 München (DE)**

Remarks:
The applicant has filed a text with which it is intended to bring the translation into conformity with the application as filed (Art. 14(2) EPC).

(54) **NEGATIVE ELECTRODE FOR LITHIUM SECONDARY BATTERY AND LITHIUM SECONDARY BATTERY COMPRISING SAME**

(57) An anode for a lithium secondary battery according to exemplary embodiments includes an anode current collector, and an anode active material layer disposed on at least one surface of the anode current collector. The anode active material layer may include a multilayer anode active material layer structure having different porosities. The anode for a lithium secondary battery may have a predetermined orientation index $(A_{110}/A_{oo4})$.

[FIG. 2]

EP 4 654 287 A1

## Description

[Technical Field]

The present disclosure relates to a negative electrode (hereinafter, referred to as an anode) for a lithium secondary battery and a lithium secondary battery including the same.

[Background Art]

A secondary battery is a battery that can be repeatedly charged and discharged, and has been widely applied to various portable electronic communication devices such as camcorders, mobile phones, and laptop computers with rapid progress of information and communication technology and display industries. Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Recently, as the application scope of lithium secondary batteries continues to expand, development for a lithium secondary battery having a higher capacity and output is progressing. For example, cathode or anode materials capable of providing higher capacity have been studied. In particular, when the electrochemical reaction potential of the anode active material is close to that of lithium metal, the reversibility of the reaction with lithium ions is high, and the diffusion rate of lithium ions is fast, the performance of the battery may be improved.

The anode may use a carbon-based material or a silicon-based material as an anode active material. The active material particles may undergo structural damage, such as cracking, when charging and discharging are repeated, potentially leading to mechanical deformation of the anode. Accordingly, there is a need to develop an anode that maintains stability and cycle performance during repeated charge and discharge cycles, while also ensuring output and capacity properties.

[Summary of Invention]

[Problems to be Solved by Invention]

An object of the present disclosure is to provide an anode for a lithium secondary battery having improved stability and operational reliability.

Another object of the present disclosure is to provide a lithium secondary battery having improved stability and operational reliability.

[Means for Solving Problems]

An anode for a lithium secondary battery according to exemplary embodiments may include: an anode current collector; and an anode active material layer disposed on at least one surface of the anode current collector. The anode active material layer may include a first active material layer disposed on at least one surface of the anode current collector and including a first anode active material, and a second active material layer disposed on the first active material layer and including a second anode active material.

A ratio ($A_{110}/A_{004}$) of an area ($A_{110}$) obtained by integrating the peak of a (110) plane to an area ($A_{004}$) obtained by integrating the peak of a (004) plane in the X-ray diffraction graph of the anode for a lithium secondary battery may be from 0.05 to 0.09.

A porosity of the second active material layer may be greater than that of the first active material layer.

In some embodiments, the porosity of the first active material layer may be 10% by volume to 30% by volume based on the total volume of the first active material layer.

In some embodiments, the porosity of the second active material layer may be 30% by volume to 50% by volume based on the total volume of the second active material layer.

In some embodiments, the porosity of the anode active material layer may be 30% by volume or less based on the total volume of the anode active material layer.

In some embodiments, the anode active material layer may include a silicon-based active material and a carbon-based active material.

In some embodiments, the content of the silicon-based active material included in the second active material layer may be greater than the content of the silicon-based active material included in the first active material layer.

In some embodiments, the content of the silicon-based active material included in the first anode active material may be 5% by weight or less based on the total weight of the first anode active material.

In some embodiments, the content of the silicon-based active material included in the second anode active material may be 5% by weight to 10% by weight based on the total weight of the second anode active material.

In some embodiments, the content of the silicon-based active material, based on the total weight of the silicon-based active material and the carbon-based active material included in the anode active material layer, may be greater than 0% by weight and less than or equal to 10% by weight.

In some embodiments, the silicon-based active material may include Si or $SiO_x$ ($0<x<2$).

In some embodiments, a ratio of a weight of the first active material layer to a weight of the second active material layer may be 1 to 2.

In some embodiments, a ratio of a thickness of the first active material layer to a thickness of the second active material layer may be 0.5 to 2.

In some embodiments, the density of the anode active material layer may be 1.3 g/cc to 1.7 g/cc.

A lithium secondary battery according to exemplary embodiments may include: the above-described anode for a lithium secondary battery; and a cathode for a lithium secondary battery disposed opposite to the anode for a lithium secondary battery.

[Advantageous effects]

The anode for a lithium secondary battery according to exemplary embodiments may include an anode active material layer having a multilayer structure with different porosities. Accordingly, the conductivity of lithium ions and electrons may be improved, and the structural stability and cycle life properties of the anode active material layer may be enhanced. The anode may have a predetermined orientation index ($A_{110}/A_{004}$). Accordingly, the volume expansion of the lithium secondary battery may be prevented, and the cycle life properties and fast charging properties may be improved.

The porosity of the active material layer disposed in contact with the anode current collector may be smaller than that of the active material layer disposed on the surface of the anode. Since the diffusion resistance of lithium ions in the anode may be reduced, the intercalation and deintercalation of lithium ions may be facilitated, and the conductivity in the anode may be improved. In addition, since the porosity of the active material layer in contact with the anode current collector is relatively small, delamination and detachment of the anode active material layer may be prevented, and the structural stability and cycle life properties of the anode may be improved.

The anode for a lithium secondary battery may include a carbon-based active material and a silicon-based active material. By including different types of anode active materials, the battery may have improved cycle life properties, and a high energy density and high charge and discharge capacities.

[Brief Description of Drawings]

FIG. 1 is a schematic cross-sectional view illustrating an anode for a lithium secondary battery according to exemplary embodiments.

FIG. 2 is a schematic plan view illustrating a lithium secondary battery according to exemplary embodiments.

FIG. 3 is a schematic cross-sectional view illustrating an electrode assembly according to exemplary embodiments.

FIG. 4 is an XRD graph of anodes for a lithium secondary battery according to Example 1 and Example 3.

[Mode for Carrying out Invention]

An anode for a lithium secondary battery according to embodiments of the present disclosure may include an anode active material layer having a multilayer structure.

The lithium secondary battery according to embodiments of the present disclosure may include the above-described anode for a lithium secondary battery.

The lithium secondary battery according to embodiments of the present disclosure may be widely applied in green technology fields, such as electric vehicles, battery charging stations, as well as solar power generation, wind power generation, and the like, which use the batteries. In addition, the lithium secondary battery according to embodiments of the present disclosure may be used in eco-friendly electric vehicles, hybrid vehicles, and the like, which are aimed at mitigating climate change by reducing air pollution and greenhouse gas emissions.

Hereinafter, the present disclosure will be described in detail.

The terms "upper surface," "lower surface," "bottom surface," "first," and "second" as used herein indicate relative positional relationships among the respective components and do not imply an absolute vertical orientation.

The expressions "on," "above," or "between," and the phrases such as "is present," "is disposed," or "is interposed" as used herein include not only cases where a component is directly arranged but also cases where one or more other components are interposed therebetween.

An anode for a lithium secondary battery (hereinafter, also abbreviated as the "anode") may include an anode current collector, an anode active material layer disposed on at least one surface of the anode current collector and including an anode active material.

The anode active material layer may include a first active material layer disposed on the anode current collector and including a first anode active material, and a second active material layer disposed on the first active material layer and including a second anode active material.

According to exemplary embodiments, an orientation index ($A_{110}/A_{004}$) of the anode for a lithium secondary battery may be 0.05 to 0.09. The orientation index may be measured using X-ray diffraction analysis (XRD) on the anode.

The orientation index ($A_{110}/A_{004}$) may be measured as a ratio of an area ($A_{110}$) obtained by integrating the peak of the (110) plane to an area ($A_{004}$) obtained by integrating the peak of the (004) plane after XRD measurement of the anode for a lithium secondary battery.

For example, the orientation index may indicate the degree to which particles and crystal structures inside the anode are arranged in a certain direction. For instance, the value of the orientation index of the anode may be adjusted depending on how the anode active material particles, or the crystal structures within the particles, are arranged or oriented in the anode.

For example, the orientation index may be adjusted by controlling the viscosity or application amount of the anode slurry, the pressure applied during application and rolling of the anode slurry, the strength of the applied magnetic field, the exposure time, and the like.

In one embodiment, the peak of the (110) plane of the anode may appear at a diffraction angle ($2\theta$) of 73° to 79° in the XRD graph. In one embodiment, the peak of the (004) plane of the anode may appear at a diffraction angle ($2\theta$) of 52° to 58° in the XRD graph.

In one embodiment, the XRD analysis may be performed on the anode for a lithium secondary battery using CuK$\alpha$ radiation in a diffraction angle range of 15° to 90° at a scan rate of 0.02° per step.

The orientation index ($A_{110}/A_{004}$) of the anode is adjusted within the above range, so that the diffusion rate of lithium ions between the anode active materials may be increased, and the conductivity of lithium ions and electrons within the anode may be enhanced. For example, when the anode has an optimal orientation, the diffusion path and diffusion resistance of lithium ions may be reduced, and the mobility of ions may be improved. Accordingly, the output performance and fast charging performance of the lithium secondary battery may be enhanced.

In addition, due to the high ion conductivity, side reactions on the surface of the anode may be suppressed, and corrosion of the anode and the generation of by-products may be prevented, thereby improving the cycle life properties and charge and discharge efficiency of the lithium secondary battery.

For example, if the orientation index ($A_{110}/A_{004}$) of the anode is less than 0.05, the thickness expansion rate of the anode may increase, so that the electrode density may be reduced, resulting in a decrease in electrode density, and the energy density per unit volume and the fast charging cycle life may be degraded.

For example, if the orientation index ($A_{110}/A_{004}$) of the anode exceeds 0.09, the lithium ion conductivity within the anode may decrease, which may deteriorate the fast charging performance and reduce the high-temperature cycle life properties.

In some embodiments, the orientation index ($A_{110}/A_{004}$) of the anode may be 0.05 to 0.07. Within the above range, the lithium ion diffusion rate within the anode may further increase, and the capacity, fast charge cycle life properties, high-temperature stability, and overall cycle properties of the lithium secondary battery may also be improved. Therefore, the capacity of the lithium secondary battery may be maintained at a high level even during repeated charge and discharge and fast charging under harsh high-temperature and high-humidity conditions.

In some embodiments, the anode current collector may include gold, stainless steel, nickel, aluminum, titanium, copper, or an alloy thereof, and may include, for example, copper or a copper alloy.

According to exemplary embodiments, the anode active material layer may include pores. For example, the anode active material layer may have a porous structure. Accordingly, the contact resistance between particles and the migration path of ions within the anode active material layer may be reduced, resulting in increased ion conductivity of the anode.

According to exemplary embodiments, the porosity of the second active material layer may be greater than that of the first active material layer. The porosity may be the percentage of the volume occupied by pores relative to the total volume of the active material layer.

Since the first active material layer disposed on the anode current collector has a relatively low porosity, corrosion and oxidation of the anode current collector caused by electrolyte penetration may be prevented. Therefore, the structural stability and cycle life properties of the anode for a lithium secondary battery may be enhanced.

In addition, since the second active material layer has a relatively high porosity, the overall porosity of the anode for a lithium secondary battery may increase. Accordingly, the ion conductivity of the anode may be further improved, resulting in enhanced initial efficiency and fast charging performance of the lithium secondary battery.

In one embodiment, the porosity may be measured using the Brunauer-Emmett-Teller (BET) method or the Mercury Intrusion Porosimetry method. In one embodiment, the porosity may be calculated using Equation 1 below based on the weight, volume, and true density of each active material layer. For example, the true density of the active material layer may be calculated as a ratio of the weight to the volume measured in a state where the materials constituting the active material layer are packed without the presence of pores.

In one embodiment, the porosity of the first active material layer may be 10% by volume ("vol%") to 30 vol%, and may be 20 vol% to 30 vol%, based on the total volume of the first active material layer. Within the above range, oxidation and damage to the anode current collector due to contact with the electrolyte may be prevented, and the lithium ion conductivity and electronic conductivity of the anode active material layer may be improved.

In one embodiment, the porosity of the second active material layer may be 30 vol% to 50 vol%, and may be 30 vol% to 40 vol%, based on the total volume of the second active material layer. Within the above range, the diffusion rate of lithium ions may increase without substantially reducing the energy density of the anode active material layer, and the anode for a lithium secondary battery may provide improved charging performance and high capacity.

In some embodiments, the porosity of the anode active material layer may be 30 vol% or less, and for example, may be 20 vol% to 30 vol%, based on the total volume of the anode active material layer.

If the porosity of the anode active material layer exceeds 30 vol%, the structural stability of the anode active material layer may deteriorate due to the excessive porosity, and side reactions between the anode active material and the electrolyte may increase, thereby degrading the cycle life properties of the lithium secondary battery. In addition, the contact between the anode active material particles may decrease, resulting in degraded fast charging and output performance, and a reduction in the energy density of the anode active material layer.

If the porosity of the anode active material layer is 20 vol% or more, the electrolyte impregnation ability of the anode active material layer may be improved, and the lithium ion conductivity may be further enhanced, thereby improving the fast charging performance and charge and discharge capacities of the lithium secondary battery.

According to exemplary embodiments, the anode active material layer may include a carbon-based active material and a silicon-based active material. For example, the first anode active material and the second anode active material may each include a carbon-based active material and/or a silicon-based active material.

The silicon-based active material has a high reversible capacity and high energy density, which can improve the initial efficiency and charge and discharge capacities of the anode active material. However, a solid electrolyte interphase (SEI) may be repeatedly formed due to reactions between the silicon-based active material and the electrolyte, which may lead to electrolyte depletion or increased resistance caused by irreversible decomposition of the electrolyte.

According to exemplary embodiments, since the anode active material layer includes both a silicon-based active material and a carbon-based active material, the lithium secondary battery may exhibit high capacity and high output performance, and its cycle properties may be improved. For example, the silicon-based active material may enhance the capacity and energy density of the battery, while the carbon-based active material may suppress the deterioration of the silicon-based active material, thereby improving the cycle life and capacity retention of the battery.

In some embodiments, the silicon-based active material may include silicon (Si), silicon oxide ($SiO_x$, $0<x<2$), a silicon-metal alloy, or a silicon-carbon composite (Si-C). These may be used alone or in combination of two or more thereof. In one embodiment, the silicon-based active material may include Si and/or silicon oxide.

In one embodiment, the silicon oxide may include a lithium compound or a magnesium compound. For example, the $SiO_x$ containing a lithium compound or a magnesium compound may be $SiO_x$ that has been pre-treated with lithium or magnesium. For example, the $SiO_x$ containing a lithium compound or a magnesium compound may include lithium silicate or magnesium silicate, or the like.

In one embodiment, the silicon-carbon composite may include silicon carbide (SiC) which is formed by mechanically alloying silicon and carbon, or silicon-carbon particles having a core-shell structure.

In some embodiments, the carbon-based active material may include amorphous carbon such as hard carbon, soft carbon, calcined coke, or mesophase pitch carbide, and/or crystalline carbon such as natural graphite or artificial graphite. These may be used alone or in combination of two or more thereof.

In one embodiment, the carbon-based active material may include crystalline carbon such as artificial graphite or natural graphite. For example, the crystalline carbon may be suitable for a high energy density battery due to its relatively high discharge capacity and long cycle life properties. In addition, by including natural graphite and artificial graphite having high thermal and chemical stability, both the high-temperature storage and high-temperature cycle life properties of the battery may be improved.

According to exemplary embodiments, the silicon-based active material may be included in different contents in the first active material layer and the second active material layer, respectively. For example, the content of the silicon-based active material included in the first anode active material and the content of the silicon-based active material included in the second anode active material may differ from each other.

In some embodiments, the content of the silicon-based active material included in the second active material layer may be greater than the content of the silicon-based active material included in the first active material layer.

Accordingly, a silicon-based active material having a high energy density may be provided by the second active material layer disposed on the surface of the anode, and the charge and discharge capacities and fast charging performance of the anode for a lithium secondary battery may be improved.

In addition, since the first active material layer disposed adjacent to the anode current collector contains a relatively small amount of silicon-based active material, degradation in the cycle life of the anode active material layer and detachment or delamination caused by the degradation and volume expansion of the silicon-based active material may be prevented.

In some embodiments, the first anode active material may include a silicon-based active material and a carbon-based active material.

In one embodiment, the content of the silicon-based active material included in the first anode active material may be 5% by weight ("wt%") or less based on the total weight of the first anode active material, and for example, may be greater than 0 wt% and less than or equal to 5 wt%. Within the above range, short-circuiting and delamination of the first active material layer due to volume expansion of the silicon-based active material may be prevented.

In some embodiments, the second anode active material may include a silicon-based active material and a carbon-based active material.

In one embodiment, the content of the silicon-based active material included in the second anode active material may be 5 wt% to 10 wt% based on the total weight of the second anode active material. Within the above range, the capacity of the battery may increase, and the initial efficiency and lithium ion conductivity may be improved.

In some embodiments, the content of the silicon-based active material based on the total weight of the silicon-based active material and the carbon-based active material included in the anode active material layer may be greater than 0 wt% and less than or equal to 10 wt%, and preferably from 3 wt% to 5 wt%. Within the above range, a high-capacity lithium secondary battery may be provided by the silicon-based active material, and deterioration of the active material due to side reactions with the electrolyte and short-circuiting in the anode may be prevented.

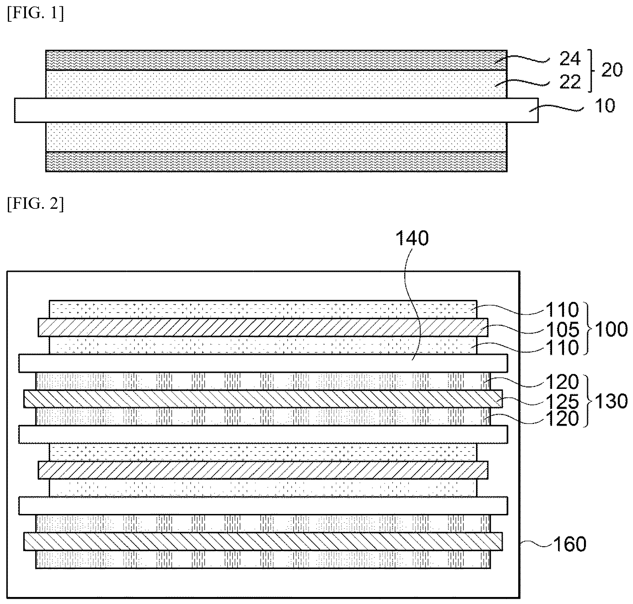

FIG. 1 is a schematic cross-sectional view illustrating an anode for a lithium secondary battery according to exemplary embodiments.

Referring to FIG. 1, the anode for a lithium secondary battery may include an anode current collector 10 and an anode active material layer 20 formed on at least one surface of the anode current collector 10. The anode active material layer 20 may include a first active material layer 22 formed on at least one surface of the anode current collector 10, and a second active material layer 24 formed on the first active material layer 22.

According to exemplary embodiments, the anode active material layer 20 may be formed on both sides of the anode current collector 10. For example, the anode active material layer 20 may be coated on upper and lower surfaces of the anode current collector 10, respectively, and may be directly applied to the surface of the anode current collector 10.

According to exemplary embodiments, a ratio ($W_1/W_2$) of a weight ($W_1$) of the first active material layer 22 to a weight ($W_2$) of the second active material layer 24 may be 1 to 2.

Within the range of the weight ratio ($W_1/W_2$), a high-capacity anode active material layer may be provided by the first active material layer 22 having a relatively small porosity, and the charge and discharge capacities and cycle life properties of the lithium secondary battery may be improved. For example, since the first active material layer 22 has a greater weight than the second active material layer 24, the porosity of the anode active material layer may be properly controlled. Accordingly, the structural stability and cycle properties of the anode active material layer 20 may be improved, and the overall energy density may be increased.

In addition, within the above range of the weight ratio ($W_1/W_2$), the diffusion rate of lithium ions may be improved by the second active material layer 24, and the internal resistance and the migration path of lithium ions may be reduced, thereby improving the initial efficiency and fast charging performance of the lithium secondary battery.

According to exemplary embodiments, a ratio ($T_1/T_2$) of a thickness ($T_1$) of the first active material layer 22 to a thickness ($T_2$) of the second active material layer 24 may be 0.5 to 2. For example, the thickness of each active material layer may be defined as a length in a direction perpendicular to the surface of the anode current collector 10 on which the anode active material layer 20 is disposed.

Within the above range of the thickness ratio ($T_1/T_2$), the energy density of the anode for a lithium secondary battery may be improved, and the electron migration path between the anode current collector 10 and the anode active material layer 20 may be shortened. Therefore, the output performance and fast charging performance of the lithium secondary battery may be improved, and the high-temperature stability and cycle properties may be enhanced.

In one embodiment, the thickness of the first active material layer 22 may be greater than that of the second active material layer 24. For example, the thickness ratio ($T_1/T_2$) of the first active material layer 22 to the second active material layer 24 may be 1 to 2, and may be 1 to 1.5.

As the first active material layer 22 having a relatively small porosity and high energy density is formed to be relatively thick, the current density per unit cross-sectional area or volume of the lithium secondary battery may be increased. In addition, the cycle properties and operational reliability of the lithium secondary battery may be improved by the first active material layer 22 due to its high structural stability.

According to exemplary embodiments, the electrode density of the anode for a lithium secondary battery may be 1.3 g/cc to 1.7 g/cc, and may be 1.4 g/cc to 1.6 g/cc. For example, the electrode densities of the first active material layer 22 and the second active material layer 24 may each be 1.3 g/cc to 1.7 g/cc and 1.4 g/cc to 1.6 g/cc.

Within the above range, a decrease in the current density per unit volume of the anode may be prevented, and the lithium secondary battery may exhibit high energy density and high charge and discharge capacities.

In some embodiments, the anode active material layer 20 may further include a binder and a conductive material.

For example, the first active material layer 22 may be prepared by applying a first anode slurry, prepared by mixing the first anode active material, a conductive material and a binder in a solvent, to the anode current collector 10, and then drying and roll-pressing the applied layer. For example, the second active material layer 24 may be prepared by applying a second anode slurry, prepared by mixing a second anode active material, a conductive material and a binder in a solvent, to the first active material layer 22, and then drying and roll-pressing the applied layer.

The first anode slurry and the second anode slurry may further include a thickener or a dispersant.

The conductive material may be included to promote electron migration between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, $LaSrCoO_3$, and $LaSrMnO_3$, etc.

In some embodiments, the binder may include vinylidene fluoride-hexafluoropropylene copolymer (PVDF-co-HFP), polymethyl methacrylate (PVDF), polyacrylonitrile, polymethylmethacrylate, polyvinyl alcohol, polyvinylpyrrolidone, polyethylene, polypropylene, polyacrylic acid, or styrene-butadiene rubber (SBR). These may be used alone or in combination of two or more thereof.

For example, the binder may include an acrylic polymer binder, an SBR binder, or a mixture thereof. Accordingly, the expansion and contraction of the silicon-based active material may be suppressed, and decomposition or collapse of the active material may be prevented. In addition, the spacing between anode active material particles may be adjusted, thereby reducing the internal resistance of the anode. As a result, stable capacity and output may be maintained over a long period even during repeated charge and discharge cycles.

In some embodiments, the thickener may include carboxymethyl cellulose (CMC), methyl cellulose (MC), hydroxypropyl cellulose (HPC), methyl hydroxypropyl cellulose (MHPC), or the like.

In some embodiments, for each of the first anode slurry and the second anode slurry, the binder may be included in an amount of 1 wt% to 5 wt% based on the total weight of the solids in the anode slurry, and the thickener may be included in an amount of 0.1 wt% to 5 wt% based on the total weight of the solids in the anode slurry,.

Hereinafter, a secondary battery according to embodiments of the present disclosure will be described in detail with reference to the accompanying drawings.

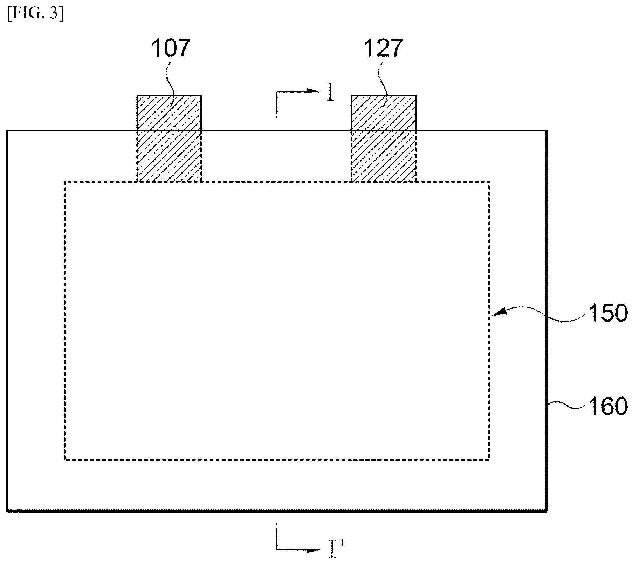

FIGS. 2 and 3 are schematic plan and cross-sectional views of a secondary battery according to exemplary embodiments, respectively. For example, FIG. 3 is a cross-sectional view taken on line I-I' shown in FIG. 2 in a thickness direction of the lithium secondary battery.

Meanwhile, for convenience of description, the cathode and anode are omitted in FIG. 2.

Referring to FIGS. 2 and 3, the secondary battery may be provided as the lithium secondary battery. According to exemplary embodiments, the secondary battery may include an electrode assembly 150 and a case 160 in which the electrode assembly 150 is accommodated. The electrode assembly 150 may include a cathode 100, an anode 130 and a separation membrane 140.

The cathode 100 may include a cathode current collector 105 and a cathode active material layer 110 formed on at least one surface of the cathode current collector 105. According to exemplary embodiments, the cathode active material layer 110 may be formed on both surfaces (e.g., upper and lower surfaces) of the cathode current collector 105.

For example, the cathode active material layer 110 may be coated on the upper surface and the lower surface of the cathode current collector 105, respectively, and may be directly applied to the surface of the cathode current collector 105.

The cathode current collector 105 may include, for example, stainless steel, nickel, aluminum, titanium, copper, or an alloy thereof, and preferably includes aluminum or an aluminum alloy.

The cathode active material layer 110 includes lithium metal oxide as a cathode active material, and according to exemplary embodiments, may include lithium (Li)-nickel (Ni)-based oxide.

In some embodiments, the lithium metal oxide included in the cathode active material layer 110 may be represented by Formula 1 below.

[Formula 1]  $Li_{1+a}Ni_{1-(x+y)}Co_xM_yO_2$

In the Formula 1, $\alpha$, x and y may satisfy $-0.05 \leq a \leq 0.15$, $0.01 \leq x \leq 0.2$, and $0 \leq y \leq 0.2$, and M may be at least one element selected from Na, Mg, Ca, Y, Ti, Zr, Hf, V, Nb, Ta, Cr, Mo, W, Mn, Fe, Cu, Ag, Zn, B, Al, Ga, C, Si, Sn and Ba. In one embodiment, x and y may satisfy $0.01 \leq x \leq 0.20$, and $0.01 \leq y \leq 0.15$.

Preferably, in Formula 1, M may be manganese (Mn). In this case, nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it can be disadvantageous in terms of mechanical and electrical stabilities.

In one embodiment, cobalt (Co) may be a metal associated with the conductivity or resistance of the lithium secondary battery. In one embodiment, M includes manganese (Mn), and Mn may be provided as a metal associated with the mechanical and electrical stability of the lithium secondary battery.

The chemical structure represented by Formula 1 shows a bonding relationship between elements included in the lattice structure or crystal structure of the cathode active material, and does not exclude other additional elements. For example, M may be provided as a main active element of the cathode active material. Here, it should be understood that Formula 1 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the crystal structure. The auxiliary element may be incorporated into the crystal structure together to form a bond, and it should be understood that this case is also included within the chemical structure represented by Formula 1.

For example, a cathode slurry may be prepared by mixing a cathode active material with a cathode binder, a conductive material, and/or a dispersant in a solvent, followed by stirring the same. The cathode slurry may be coated on the cathode current collector 105, followed by drying and compression to prepare the cathode active material layer 110.

The cathode binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for the cathode. In this case, an amount of the binder for forming the cathode active material layer 110 may be reduced and an amount of the cathode active material or lithium metal oxide particles may be relatively increased, thereby improving the output and capacity of the secondary battery.

For example, the conductive material may include carbon-based conductive materials such as graphite, carbon black, carbon nanofibers, carbon nanotubes, and/or metal-based conductive materials such as tin, tin oxide, zinc oxide, titanium oxide, and metal fibers.

In some embodiments, the cathode 100 may have an electrode density of 3.0 to 3.9 g/cc, and for example, 3.2 to 3.8 g/cc.

As the anode 130, the above-described anode for a lithium secondary battery may be used. For example, the anode 130 may include an anode current collector 125 and an anode active material layer 120 formed on at least one surface of the anode current collector 125. According to exemplary embodiments, the anode active material layer 120 may be formed on both surfaces (e.g., upper and lower surfaces) of the anode current collector 125. The anode active material layer 120 may include a first active material layer formed on the anode current collector 125 and a second active material layer formed on the first active material layer.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the process, thereby further improving the output and capacity properties.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fibers having a high melting point, polyethylene terephthalate fibers, etc.

A plurality of cathodes 100 and anodes 130 may be stacked in the thickness direction with the separation membrane 140 interposed therebetween.

According to exemplary embodiments, an electrode cell is defined by the cathode 100, the anode 130, and the separation membrane 140, and a plurality of electrode cells are stacked to form, for example, a jelly roll type electrode assembly 150. For example, the electrode assembly 150 may be formed by winding, laminating, or folding the separation membrane 140.

The electrode assembly 150 is accommodated in the case 160, and an electrolyte may be injected into the case 160 together therewith. The case 160 may include, for example, a pouch, a can, or the like.

According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

As illustrated in FIG. 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

In FIG. 2, the cathode lead 107 and the anode lead 127 are shown as being formed on the same side of the lithium secondary battery or the case 160, but they may alternatively be formed on the opposite sides.

For example, the cathode lead 107 may be formed on one side of the case 160, and the anode lead 127 may be formed on the other side of the case 160.

The lithium secondary battery may be manufactured, for example, in a cylindrical shape using a can, a prismatic shape, a pouch shape or a coin shape.

Hereinafter, experimental examples including specific examples and comparative examples are proposed to facilitate understanding of the present invention. However, the following examples are only given for illustrating the present invention and are not intended to limit the appended claims. It will be apparent to those skilled in the art that various alterations and modifications are possible within the scope and spirit of the present invention, and such alterations and modifications are duly included in the appended claims.

<u>**Examples and Comparative Examples**</u>

1. **Preparation of anode for a lithium secondary battery**

**(1) Example 1**

A first anode slurry was prepared by mixing a mixture of artificial graphite and silicon (Si) as a first anode active material, carbon nanotubes (CNT) as a conductive material, carboxymethyl cellulose (CMC) as a thickener, and styrene-butadiene rubber (SBR) as a binder in a weight ratio of 97.0:0.2:1.3:1.5. The first anode slurry was applied to a copper (Cu) foil, followed by drying and roll-pressing, to form a first active material layer having a composite density of 4 mg/cm$^2$ (based on cross-sectional area) and 1.7 g/cc.

A second anode slurry was prepared by mixing a mixture of artificial graphite and silicon (Si) as a second anode active material, carbon nanotubes (CNTs) as a conductive material, carboxymethyl cellulose (CMC) as a thickener, and styrene-butadiene rubber (SBR) as a binder in a weight ratio of 97.0:0.2:1.3:1.5. The second anode slurry was applied to the first active material layer, followed by drying and roll-pressing, to form a second active material layer having a composite density of 4 mg/cm$^2$ (based on cross-sectional area) and 1.7 g/cc.

The contents of silicon (Si) in the first anode active material and the second anode active material are shown in Table 1 below. The first active material layer and the second active material layer were formed to satisfy the porosity and thickness indicated in Table 1 below.

The porosity and thickness of each active material layer, as well as the orientation index of the anode active material layer, were controlled by adjusting the application amount of each anode slurry and by varying the pressure and magnetic field applied during the coating and roll-pressing processes.

**(2) Examples 2 to 11**

Anodes for a lithium secondary battery were prepared in the same manner as in Example 1, except that the content of silicon (Si) included in each active material layer, the thickness of each active material layer, the porosity, and the orientation index were adjusted as shown in Table 1 below.

**(3) Comparative Examples 1 to 6**

Anodes for a lithium secondary battery were prepared in the same manner as in Example 1, except that the content of silicon (Si) included in each active material layer, the thickness of each active material layer, the porosity, and the orientation index were adjusted as shown in Table 2 below.

**(4) Comparative Examples 7 and 8**

Anodes for a lithium secondary battery were prepared in the same manner as in Example 1, except that the second active material layer was omitted and only the first anode slurry was used to form the first active material layer so as to satisfy the conditions shown in Table 2 below.

**2. Measurement of porosity**

The porosity of the first active material layer and the second active material layer prepared as described above was calculated using the true density and electrode density of the constituent materials. For example, the porosity was calculated as shown below. The electrode density was calculated as the ratio of the weight to the volume (weight/volume) of each active material layer. The true density was calculated as the ratio of the total weight to the total volume excluding the pores of the materials constituting each active material layer. Specifically, the porosity might be calculated using Equation 1 below.

$$[\text{Equation 1}]$$

$$\text{Porosity} = \{(\text{True density} - \text{Electrode density}) \, / \, \text{True density}\} \times 100$$

**3. Measurement of orientation index**

The orientation index of the anode for a lithium secondary battery, prepared as described above, was measured using an X-ray diffraction (XRD) apparatus (Empyrean, manufactured by PANalytical). Specifically, the peaks of the (004) and (110) planes of crystals included in the anode were measured by X-ray diffraction analysis. Then, the orientation index ($A_{110}/A_{004}$) was calculated as the ratio of the integral area ($A_{110}$) of the peak of the (110) plane to the integral area ($A_{004}$) of the peak of the (004) plane.

The specific conditions of the X-ray diffraction analysis are as follows:

- X-ray source anode: Cu

- Generator voltage: 45 kV

- Tube current: 40 mA

- Scan rate: 0.02°/step

- (110) plane: $73° \leq 2\theta \leq 79°$

- (004) plane: $52° \leq 2\theta \leq 58°$

[TABLE 1]

| Classification | First active material layer | | | Second active material layer | | | Orientation index ($A_{110}/A_{004}$) |
|---|---|---|---|---|---|---|---|
| | Porosity (vol%) | Si Content (wt%) | Thickness (μm) | Porosity (vol%) | Si Content (wt%) | Thickness (μm) | |
| Example 1 | 25 | 2 | 60 | 35 | 8 | 60 | 0.05 |
| Example 2 | 25 | 2 | 60 | 35 | 8 | 60 | 0.07 |
| Example 3 | 25 | 2 | 60 | 35 | 8 | 60 | 0.09 |
| Example 4 | 10 | 2 | 60 | 35 | 8 | 60 | 0.07 |
| Example 5 | 25 | 2 | 60 | 45 | 8 | 60 | 0.07 |

(continued)

| Classification | First active material layer | | | Second active material layer | | | Orientation index $(A_{110}/A_{004})$ |
|---|---|---|---|---|---|---|---|
| | Porosity (vol%) | Si Content (wt%) | Thickness ($\mu$m) | Porosity (vol%) | Si Content (wt%) | Thickness ($\mu$m) | |
| Example 6 | 35 | 2 | 60 | 45 | 8 | 60 | 0.07 |
| Example 7 | 25 | 5 | 60 | 35 | 5 | 60 | 0.07 |
| Example 8 | 25 | 8 | 60 | 35 | 2 | 60 | 0.07 |
| Example 9 | 25 | - | 60 | 35 | 8 | 60 | 0.07 |
| Example 10 | 25 | 2 | 40 | 35 | 8 | 80 | 0.07 |
| Example 11 | 25 | 2 | 80 | 35 | 8 | 40 | 0.07 |

[TABLE 2]

| Classification | First active material layer | | | Second active material layer | | | Orientation index $(A_{110}/A_{004})$ |
|---|---|---|---|---|---|---|---|
| | Porosity (vol%) | Si Porosity (wt%) | Thickness ($\mu$m) | Porosity (vol%) | Si Porosity (wt%) | Thickness ($\mu$m) | |
| Comparative Example 1 | 25 | 2 | 60 | 35 | 8 | 60 | 0.04 |
| Comparative Example 2 | 25 | 2 | 60 | 35 | 8 | 60 | 0.11 |
| Comparative Example 3 | 25 | 2 | 60 | 35 | 8 | 60 | 0.25 |
| Comparative Example 4 | 35 | 2 | 60 | 25 | 8 | 60 | 0.07 |
| Comparative Example 5 | 35 | 8 | 60 | 25 | 2 | 60 | 0.07 |
| Comparative Example 6 | 40 | 8 | 60 | 10 | 2 | 60 | 0.07 |
| Comparative Example 7 | 25 | 2 | 120 | - | - | - | 0.07 |
| Comparative Example 8 | 35 | 8 | 120 | - | - | - | 0.07 |

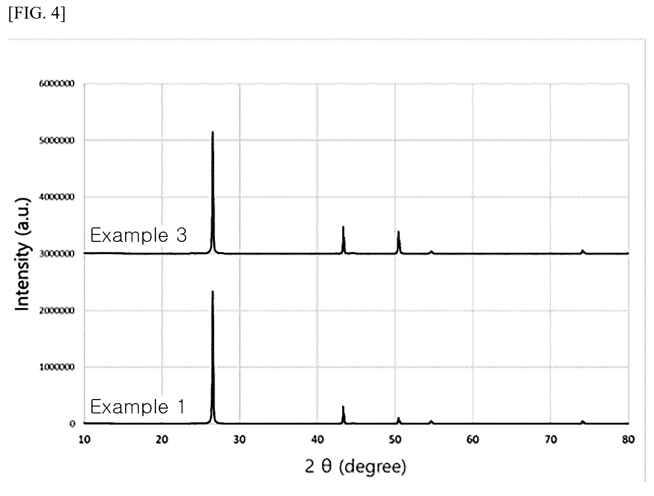

FIG. 4 is an XRD graph of the anodes for a lithium secondary battery according to Examples 1 and 3.

Referring to FIG. 4, it can be seen that, in the XRD graph of Example 1, the ratio $(A_{110}/A_{004})$ of the integral area $(A_{110})$ of the peak between 73° and 79° to the integral area $(A_{004})$ of the peak between 52° and 58° is 0.05. In addition, it can be seen that, in the XRD graph of Example 3, the ratio $(A_{110}/A_{004})$ of the integral area $(A_{110})$ of the peak between 73° and 79° to the integral area $(A_{004})$ of the peak between 52° and 58° is 0.09.

## 4. Manufacture of secondary battery

A secondary battery in the form of a coin cell was manufactured using the prepared anode for a lithium secondary battery, a Li foil as a counter electrode, and an electrolyte containing 1 wt% fluoroethylene Carbonate (FEC) and 1.0 M LiPF$_6$ in a mixed solvent of ethylene carbonate (EC) and ethyl methyl carbonate (EMC) at a volume ratio of 3:7.

## Experimental Example

## (1) Measurement of energy density

The energy density of the secondary batteries according to the examples and comparative examples might be calculated by dividing the product of the initial discharge capacity and the average voltage of the secondary battery by the initial volume of the secondary battery. The initial volume of the secondary battery might be calculated as the product of the thickness, width and height of the cell. Specifically, the energy density of the secondary battery might be calculated using Equation 2 below.

Energy density (Wh/L) = (Initial discharge capacity (Ah) $\times$ Average voltage (V)) / (Cell thickness $\times$ Cell width $\times$ Cell height).　　　　[Equation 2]

**(2) Evaluation of fast charge cycle life properties**

Charging (CC/CV, rate 1/3C, SOC 80%, cut-off current 0.01C) and discharging (CC, 0.5C, SOC 8%, cut-off) were performed on the secondary batteries according to the examples and comparative examples at 25°C to measure the initial discharge capacity.

Thereafter, the secondary batteries according to the examples and comparative examples were rapidly charged up to SOC 80% for 20 minutes, and discharged up to SOC 8%. This process was defined as one cycle, and 300 cycles were performed. The fast charge cycle life properties were evaluated as the percentage of the discharge capacity at the 300th cycle divided by the initial discharge capacity.

**(3) Evaluation of high-temperature cycle life properties**

The secondary batteries according to the examples and comparative examples were charged (CC/CV, rate of 1/3C, SOC 96%, cut-off current of 0.01C) at 45°C, rested for 10 minutes, discharged (CC, 0.5C, SOC 2%, cut-off), and rested again for 10 minutes. This process was defined as one cycle, and the initial discharge capacity was measured after one cycle.

Thereafter, the secondary batteries according to the examples and comparative examples were subjected to 600 charge and discharge cycles at 45°C under the same conditions as above, and the discharge capacity at the 600th cycle was measured. The high-temperature cycle life properties were evaluated as the percentage of the discharge capacity at the 600th cycle divided by the initial discharge capacity.

The evaluation results are shown together in Tables 3 and 4 below.

[TABLE 3]

| Classification | Energy density (Wh/L) | Fast charge life properties (%) | High-temperature life properties (%) |
|---|---|---|---|
| Example 1 | 720 | 91 | 90 |
| Example 2 | 720 | 92 | 90 |
| Example 3 | 720 | 92 | 88 |
| Example 4 | 720 | 90 | 88 |
| Example 5 | 710 | 90 | 89 |
| Example 6 | 700 | 89 | 87 |
| Example 7 | 720 | 90 | 89 |
| Example 8 | 720 | 89 | 88 |
| Example 9 | 690 | 89 | 90 |
| Example 10 | 720 | 89 | 88 |
| Example 11 | 710 | 90 | 90 |

[TABLE 4]

| Classification | Energy density (Wh/L) | Fast charge life properties (%) | High-temperature life properties (%) |
|---|---|---|---|
| Comparative Example 1 | 720 | 88 | 92 |
| Comparative Example 2 | 720 | 92 | 85 |
| Comparative Example 3 | 700 | 91 | 83 |
| Comparative Example 4 | 720 | 86 | 84 |
| Comparative Example 5 | 710 | 87 | 81 |
| Comparative Example 6 | 700 | 85 | 80 |
| Comparative Example 7 | 670 | 84 | 88 |
| Comparative Example 8 | 710 | 83 | 82 |

Referring to Tables 1 to 4 above, in the case of the secondary batteries according to the Examples, the energy density was high, and both the fast charge cycle life properties and the high-temperature cycle life properties were improved.

In Comparative Example 1, in which the orientation index was 0.04, the fast charge cycle life properties were deteriorated. In Comparative Examples 2 and 3, in which the orientation index was 0.11 and 0.25, respectively, the high-temperature cycle life properties were deteriorated.

In Comparative Examples 4 to 6, in which the first active material layer had a relatively higher porosity than the second active material layer, both the fast charge cycle life properties and the high-temperature cycle life properties of the secondary battery were degraded.

In Comparative Examples 7 and 8, which included an anode active material layer having a single-layer structure, the energy density was lower, and both the fast charge cycle life properties and the high-temperature cycle life properties were degraded.

**Claims**

1. An anode for a lithium secondary battery comprising:

   an anode current collector; and
   an anode active material layer comprising a first active material layer disposed on at least one surface of the anode current collector and including a first anode active material, and a second active material layer disposed on the first active material layer, including a second anode active material and having a porosity greater than that of the first active material layer,
   wherein a ratio ($A_{110}/A_{004}$) of an area ($A_{110}$) of the peak of a (110) plane to an area ($A_{004}$) of the peak of a (004) plane, as measured by X-ray diffraction analysis, is 0.05 to 0.09.

2. The anode for a lithium secondary battery according to claim 1, wherein the porosity of the first active material layer is 10 to 30% by volume based on the total volume of the first active material layer.

3. The anode for a lithium secondary battery according to claim 1, wherein the porosity of the second active material layer is 30% by volume to 50% by volume based on the total volume of the second active material layer.

4. The anode for a lithium secondary battery according to claim 1, wherein the porosity of the anode active material layer is 30% by volume or less based on the total volume of the anode active material layer.

5. The anode for a lithium secondary battery according to claim 1, wherein the ratio of $A_{110}/A_{004}$ is 0.05 to 0.07.

6. The anode for a lithium secondary battery according to claim 1, wherein the anode active material layer comprises a carbon-based active material and a silicon-based active material.

7. The anode for a lithium secondary battery according to claim 6, wherein the content of the silicon-based active material included in the second active material layer is greater than the content of the silicon-based active material included in the first active material layer.

8. The anode for a lithium secondary battery according to claim 6, wherein the content of the silicon-based active material included in the first anode active material is 5% by weight or less based on the total weight of the first anode active material.

9. The anode for a lithium secondary battery according to claim 6, wherein the content of the silicon-based active material included in the second anode active material is 5% by weight to 10% by weight based on the total weight of the second anode active material.

10. The anode for a lithium secondary battery according to claim 6, wherein the content of the silicon-based active material, based on the total weight of the silicon-based active material and the carbon-based active material included in the anode active material layer, is greater than 0% by weight and less than or equal to 10% by weight.

11. The anode for a lithium secondary battery according to claim 6, wherein the silicon-based active material comprises Si or $SiO_x$ ($0<x<2$).

12. The anode for a lithium secondary battery according to claim 1, wherein a ratio ($W_1/W_2$) of a weight ($W_1$) of the first active material layer to a weight ($W_2$) of the second active material layer is 1 to 2.

13. The anode for a lithium secondary battery according to claim 1, wherein a ratio ($T_1/T_2$) of a thickness ($T_1$) of the first active material layer to a thickness ($T_2$) of the second active material layer is 0.5 to 2.

14. The anode for a lithium secondary battery according to claim 1, wherein the density of the anode active material layer is 1.3 g/cc to 1.7 g/cc.

15. A lithium secondary battery comprising:

the anode for a lithium secondary battery according to claim 1; and
a cathode for a lithium secondary battery disposed opposite to the anode for a lithium secondary battery.

[FIG. 1]

[FIG. 2]

[FIG. 3]

[FIG. 4]

## INTERNATIONAL SEARCH REPORT

| International application No. |
| --- |
| **PCT/KR2023/017885** |

### A. CLASSIFICATION OF SUBJECT MATTER

**H01M 4/36**(2006.01)i; **H01M 4/38**(2006.01)i; **H01M 4/48**(2010.01)i; **H01M 4/587**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/052(2010.01); H01M 10/0525(2010.01); H01M 4/133(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 다층(multilayer), 제1 음극 활물질층(first negative active material layer), 제2 음극 활물질층(second negative active material layer), 배향 지수(orientation index), 공극률(porosity)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0093346 A (CONTEMPORARY AMPEREX TECHNOLOGY CO., LIMITED) 05 July 2022 (2022-07-05)<br>See claims 1, 14 and 15; paragraphs [0024], [0025], [0052]-[0056] and [0128]; table 1; and example 12. | 1-15 |
| Y | KR 10-1582718 B1 (LG CHEM, LTD.) 06 January 2016 (2016-01-06)<br>See paragraphs [0027] and [0031]; experimental examples 2 and 3; and figures 2 and 3. | 1-15 |
| Y | KR 10-2018-0125312 A (LG CHEM, LTD.) 23 November 2018 (2018-11-23)<br>See claims 1-6 and 11; paragraphs [0039]-[0044], [0070], [0152] and [0153]; and table 1. | 1-5,12-15 |
| Y | KR 10-1790400 B1 (LG CHEM, LTD.) 25 October 2017 (2017-10-25)<br>See claims 1 and 10-12; and paragraphs [0055]-[0065]. | 1-5,12-15 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 February 2024** | **08 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/KR2023/017885**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0146194 A (SAMSUNG SDI CO., LTD.) 01 November 2022 (2022-11-01)<br>See entire document. | 1-15 |

Form PCT/ISA/210 (second sheet) (July 2022)

## INTERNATIONAL SEARCH REPORT
### Information on patent family members

International application No.

**PCT/KR2023/017885**

| Patent document cited in search report | | | Publication date (day/month/year) | Patent family member(s) | | | Publication date (day/month/year) |
|---|---|---|---|---|---|---|---|
| KR | 10-2022-0093346 | A | 05 July 2022 | CN | 113875049 | A | 31 December 2021 |
| | | | | EP | 3968407 | A1 | 16 March 2022 |
| | | | | EP | 3968407 | A4 | 23 November 2022 |
| | | | | EP | 3968407 | B1 | 25 October 2023 |
| | | | | JP | 2023-505132 | A | 08 February 2023 |
| | | | | US | 2022-0102708 | A1 | 31 March 2022 |
| | | | | WO | 2021-217639 | A1 | 04 November 2021 |
| KR | 10-1582718 | B1 | 06 January 2016 | CN | 104106160 | A | 15 October 2014 |
| | | | | CN | 104106160 | B | 30 November 2016 |
| | | | | EP | 2790252 | A1 | 15 October 2014 |
| | | | | EP | 2790252 | B1 | 31 August 2016 |
| | | | | JP | 2015-513185 | A | 30 April 2015 |
| | | | | JP | 6070724 | B2 | 01 February 2017 |
| | | | | KR | 10-2014-0099987 | A | 14 August 2014 |
| | | | | TW | 201503473 | A | 16 January 2015 |
| | | | | TW | I536643 | B | 01 June 2016 |
| | | | | US | 10026956 | B2 | 17 July 2018 |
| | | | | US | 2014-0227588 | A1 | 14 August 2014 |
| | | | | WO | 2014-119960 | A1 | 07 August 2014 |
| KR | 10-2018-0125312 | A | 23 November 2018 | KR | 10-2308943 | B1 | 01 October 2021 |
| KR | 10-1790400 | B1 | 25 October 2017 | CN | 105659417 | A | 08 June 2016 |
| | | | | CN | 105659417 | B | 12 October 2018 |
| | | | | EP | 3086392 | A1 | 26 October 2016 |
| | | | | EP | 3086392 | B1 | 19 December 2018 |
| | | | | JP | 2016-532241 | A | 13 October 2016 |
| | | | | JP | 6243012 | B2 | 06 December 2017 |
| | | | | KR | 10-2015-0073107 | A | 30 June 2015 |
| | | | | PL | 3086392 | T3 | 30 April 2019 |
| | | | | TW | 201539848 | A | 16 October 2015 |
| | | | | TW | I562445 | B | 11 December 2016 |
| | | | | US | 10177380 | B2 | 08 January 2019 |
| | | | | US | 10964946 | B2 | 30 March 2021 |
| | | | | US | 2016-0181612 | A1 | 23 June 2016 |
| | | | | US | 2019-0165373 | A1 | 30 May 2019 |
| | | | | WO | 2015-093894 | A1 | 25 June 2015 |
| KR | 10-2022-0146194 | A | 01 November 2022 | CN | 115241417 | A | 25 October 2022 |
| | | | | EP | 4080604 | A2 | 26 October 2022 |
| | | | | EP | 4080604 | A3 | 02 November 2022 |
| | | | | JP | 2022-167890 | A | 04 November 2022 |
| | | | | US | 2022-0352543 | A1 | 03 November 2022 |

Form PCT/ISA/210 (patent family annex) (July 2022)